# EUROPÄISCHE PATENTANMELDUNG

(11) **EP 3 671 156 A1**
(43) Veröffentlichungstag der Anmeldung: **24.06.2020**
(21) Anmeldenummer: 19219106.2
(22) Anmeldetag: 20.12.2019
(51) Int. Cl.: G01L 1/22, G01L 3/10, G01L 1/24

(54) **TORSIONSSENSOR**

(30) Priorität: 20.12.2018 DE 102018133174
(71) Anmelder: Manner, Julia, 78549 Spaichingen (DE); Manner, Stephanie, 78549 Spaichingen (DE)
(72) Erfinder: Manner, Julia, 78549 Spaichingen (DE); Manner, Stephanie, 78549 Spaichingen (DE)
(74) Vertreter: Straub, Bernd

(57) **Zusammenfassung**

Die Erfindung betrifft einen Torsionssensor 1 zur Erfassung der Torsion eines Wellenkörpers 2 mit einer Sensoreinheit 3 zur Erfassung der Dehnung eines Körpers 2 und mit einer kontaktlosen Übertragungseinheit für Signale von der Sensoreinheit 3 über eine Sendeeinheit 4a zu einer abgesetzten Empfangseinheit 4b. Dabei ist wenigstens ein Träger 5 vorgesehen, der mit dem Wellenkörper 2 mechanisch so verbunden ist, dass Torsionen des Wellenkörpers 2 auf den Träger 5 übertragen werden und diesen verformen, und der mit wenigstens einer Sensoreinheit 3 so mechanisch verbunden ist, dass wenigstens eine Sensoreinheit 3 eine Torsion des Trägers 5 als Dehnung erfassen kann. Dabei ist die wenigstens eine Sensoreinheit 3 mit wenigstens einer Sendeeinheit 4a zur Übertragung von Signalen an die abgesetzte Empfangseinheit 4b verbunden. Dabei zeigt der Träger 5 unterschiedlich streif ausgebildete Bereiche 10,11,12, wobei zwischen dem Bereich 11 mit der Sensoreinheit 3 und dem steifen Bereich 12 mit der Sendeeinheit 4a der Bereich 10 als besonders elastischer, wenig steifer Bereich 10 ausgebildet ist und die Bereiche 11 und 12 mechanisch hinsichtlich des Schwingungsverhaltens entkoppelt. Dadurch gelingt es, Störungen im Messergebnis zu reduzieren.

Dieser Torsionssensor erweist sich als einfach zu fertigen, zu montieren und als sehr robust sowie als sehr messgenau.

## Beschreibung

### TECHNISCHES GEBIET

Die Erfindung betrifft einen Torsionssensor zur Erfassung der Torsion eines Wellenkörpers.

### STAND DER TECHNIK

Aus der DE 39 22 556 A1 ist eine berührungslose Sensorklemme bekannt. Bei dieser wird zur Vereinfachung von rückwirkungsfreiem und kontaktlosem Erfassen von statischen und dynamischen physikalischen Größen (Temperatur, Kraft, mechanische/elektrische Spannung, Torsion an Wellen, Strahlung, etc.) an Messpunkten beliebiger Gegenstände (insbesondere bewegter Teile an Maschinen, Produktionsgütern im Exschutzbereich, etc.) wird der Sensor mit einem Transponder ausgestattet, dessen Versorgungsenergie aus einem magnetischen Feld, welches von einem Sender im Sensorempfänger erzeugt wird, gewonnen wird und die Messgröße mittels Rückwirkung auf den Sender dem Sensorempfänger übermittelt wird. Die häufigste Anwendung für berührungslose Übertragungssysteme ist die Erfassung des Drehmoments (8). Sie sind sehr modular aufgebaut, flexibel einsetzbar, erfordern jedoch in der Regel einen hohen Montage- und Verdrahtungsaufwand. In der Regel bestehen diese Übertragungssysteme aus einer Dehnungsmessstreifenbeklebung, einem Sensorsignalverstärker mit einer Telemetrieeinrichtung, einer Stromversorgung, einer Stator- und Rotorantenne und einer Auswerteeinheit, sowie die Verkabelung der Komponenten. Die Modularität bringt zwar Flexibilität aber auch hohe Applikationskosten.

Eine Sensortelemetrie mit integriertem Komplettmonitoring und Remotesteuerfunktion und deren typischer Aufbau ist der DE 10 2013 001 173 A1 zu entnehmen. Für die Übertragung von Sensordaten von drehenden Wellen werden derartige Sensortelemetriesysteme eingesetzt. Diese Systeme setzen sich üblicherweise aus den 4 Hauptkomponenten Sensortelemetrieverstärker, Rotorantenne, Statorantenne und Empfänger zusammen. Dabei wird die Versorgungsenergie für den Rotor, von der Statorantenne zur Rotorantenne berührungslos übertragen. Diese ermöglichen eine einfache und sichere Übertragung der Sensordaten von den beweglichen Komponenten zu den statischen Komponenten der Sensortelemetrie, wobei die verwendeten Sensoren aufwendig, anfällig und kostenintensiv sind.

Aus dem Deutschen Patent DE 197 19 921 C2 ist eine Anordnung zur Erfassung des Drehmomentes einer Welle mit einem Messflansch und einer integrierten Rotorelektronik, mit einem rotierenden Messkörper zum Erfassen des Drehmoments mit Dehnungmessstreifen zum Wandeln der mechanischen Torsion in ein elektrisches Signal und mit einem integrierten Messverstärker zum Verstärken des Messsignals sowie einer Telemetrieübertragungseinrichtung zur Übertragung des elektrischen Messsignals bekannt. Die beschriebenen Dehnungsmessstreifen erweisen sich in der Handhabung als sehr aufwendig und im Hinblick auf Langzeitstabilität als anfällig.

Aus der Deutschen Offenlegungsschrift DE 10 2016 224 314 A1 und der Deutschen Veröffentlichung DE 11 2015 005 678 T5 ist der Einsatz von Drehmomentsensoren bei Fahrrädern bekannt, bei welchen das Drehmoment der Tretkurbel erfasst wird und zur Steuerung eines elektrischen Antriebes verwendet wird.

Aus der Deutschen Offenlegungsschrift DE 10 2006 057 225 A1 ist eine Sensoranordnung bekannt, die ein Sensorelement auf homogenem, zylinderförmigem Sensorträgermodul zeigt, das in eine Ausnehmung in der zu sensierenden Welle formschlüssig eingebracht ist und mit dieser materialschlüssig verbunden ist. Diese Sensoranordnung zur Erfassung des Drehmoments einer Welle erweist sind als sehr aufwendig in der Herstellung und als sehr anfällig während des Einbaus. Zudem sind die Messergebnisse nicht sehr aussagekräftig.

Aus der Deutschen Offenlegungsschrift DE 10 2013 000 090 A1 ist ein telemetrisches Torsionsmesssystem zur Erfassung des Drehmoments am Wellenkörper bekannt, das einen Torsionssensor und Sendeeinheit auf einem gemeinsamen und homogenen, einheitlichen Träger zeigt, der mit der zu sensierenden Welle verklebt ist. Dieses Torsionsmesssystem ist sehr aufwendig in der Montage. Die Montagezeit liegt aufgrund der Verklebung bei mehr als 5 Stunden. Zudem ist die Langzeitfestigkeit deutlich begrenzt und es wird ein hoher Temperatureintrag für die Montage benötigt. Die durch dieses Torsionsmesssystem erzielten Messergebnisse genügen regelmäßig den Anforderungen, jedoch bei hoher erforderlicher Genauigkeit erweisen sich die erzielten Messergebnisse nicht immer ausreichend aussagekräftig.

### BESCHREIBUNG DER ERFINDUNG

Der Erfindung liegt die Aufgabe zu Grunde, einen gegenüber dem Stand der Technik verbesserten Torsionssensor zur Erfassung der Torsion eines Wellenkörpers anzugeben, der sich insbesondere durch ein wenig gestörtes Messergebnis auszeichnet.

Die Aufgabe wird erfindungsgemäß mit einem Torsionssensor gelöst, welche die im Anspruch 1 angegebenen Merkmale aufweist.

Vorteilhafte Ausgestaltungen der Erfindung sind Gegenstand der Unteransprüche.

Der erfindungsgemäße Torsionssensor zur Erfassung der Torsion eines Wellenkörpers ist mit einer Sensoreinheit zur Erfassung der Dehnung eines Körpers und mit einer kontaktlosen Übertragungseinheit für Signale von der Sensoreinheit über eine Sendeeinheit zu einer abgesetzten Empfangseinheit versehen.

Zusätzlich zeigt der Torsionssensor wenigstens einen Träger, der mit dem Wellenkörper so verbunden ist, dass Torsionen des Wellenkörpers auf den oder die Träger übertragen werden und diesen oder diese verformen. Dabei sind der oder die Träger mit wenigstens einer Sensoreinheit so verbunden, dass eine Torsion des Trägers als Dehnung erfasst werden kann. Dadurch wird erfindungsgemäß die Torsion des Körpers insbesondere des Wellenkörpers über einen Träger auf die auf dem Träger befindliche Sensoreinheit zur Erfassung einer Dehnung übertragen, ohne dass eine direkte mechanische Verbindung zwischen dem zu sensierenden Körper und dem Sensorelement gegeben ist. Der Körper steht somit erfindungsgemäß nicht in direktem Kontakt mit der Sensoreinheit auf dem Träger.

Das oder die Sensorelemente sind dabei mit wenigstens einer Sendeeinheit zur Übertragung von Signalen an die abgesetzte Empfangseinheit verbunden. Diese Verbindung ist dabei signaltechnisch zu verstehen, wobei sie fakultativ auch zusätzlich mechanisch ausgebildet sein kann. Insbesondere können die Sensorelemente auch auf einem gemeinsamen Träger angeordnet sein.

Dabei zeigt der Träger verschiedene Bereiche mit unterschiedlicher Steifigkeit. Diese Bereiche befinden sich zwischen dem zu sensierenden Wellenkörper und dem Bereich der auf dem Träger angeordneten Komponenten des Torsionssensors insbesondere der wenigstens einen Sensoreinheit, der wenigstens einen Sendeeinheit und der wenigstens einen Signalverarbeitungseinheit. Vorzugsweise sind dabei steifere Bereiche zur Aufnahme der wenigstens einen Sendeeinheit und weniger steife, also elastische Bereiche zur Aufnahme der wenigstens einen Sensoreinheit und/oder zur Entkopplung der Bereiche der wenigstens einen Sendeeinheit von den Bereichen der wenigstens einen Sendeeinheit, also in dem Bereich dazwischen angeordnet. Dadurch gelingt es, einerseits die Torsion verlässlich über den Träger auf die wenigstens eine Sensoreinheit zu übertragen und andererseits durch die erfolgte Entkopplung von möglichen störenden Einflüssen durch den Bereich der wenigstens einen Sendeeinheit zu befreien oder teilweise zu befreien. Dadurch gelingt es, das Messergebnis zu verbessern.

Die unterschiedliche Steifigkeit kann dabei durch verschiedene Maßnahmen oder Kombinationen von Maßnahmen insbesondere aus der Verwendung unterschiedlicher Materialien mit unterschiedlicher Steifigkeit und/oder unterschiedlichen Materialstärken (sowohl in vertikaler als auch in lateraler Richtung) und/oder durch Vorsehen von zusätzlichen Versteifungselementen erreicht werden.

Durch diesen erfindungsgemäßen Aufbau des Torsionssensors ist eine Baugruppe geschaffen, die im Rahmen einer Vorfertigung hergestellt werden kann und die es ermöglicht, die fertigungstechnisch komplexen Schritte insbesondere die Verbindung der Sensoreinheit mit dem Träger in definierter und sicherer Umgebung und Fertigungsbedingungen zu realisieren und dann die Montage dieser Baugruppe auf die zu sensierende Welle auf vereinfachte Weise zu ermöglichen. Der Träger mit den weiteren auf ihn angebrachten Komponenten des erfindungsgemäßen Torsionssensors bildet dabei die vorgenannte Baugruppe. Neben der Möglichkeit, die wenigstens eine Sendeeinheit mit der Baugruppe signaltechnisch zu verbinden und abgesetzt von dieser zu realisieren, hat es sich als vorteilhaft erwiesen, auch die wenigstens eine Sendeeinheit auf dem Träger neben der wenigstens einen Sensoreinheit zu realisieren und damit Teil der Baugruppe zu sein.

Dabei hat es sich als besonders nützlich erwiesen, dass der Träger im Bereich zwischen einer Sensoreinheit und einer Sendeeinheit elastisch ausgebildet ist und damit weniger steif als andere Bereiche des Trägers insbesondere als der Bereich zur Aufnahme der wenigstens einen Sendeeinheit. Der oder die weniger steif ausgebildeten Bereiche werden elastische Bereiche genannt. Durch diese Ausbildung des Trägers wird es möglich, den Bereich des Trägers mit der wenigstens einen Sensoreinheit von dem Bereich mit der wenigstens einen Sendeeinheit räumlich und schwingungstechnisch zumindest teilweise zu entkoppeln, was die Möglichkeit schafft, die unterschiedlichen Bereiche des Trägers auf unterschiedliche Weise mit dem zu sensierenden Körper mechanisch zu verbinden und dabei einerseits eine effiziente, feste, mechanische Verbindung zur Übertragung der Torsion auf die wenigstens eine Sensoreinheit zu erreichen und andererseits eine ausreichende mechanische Stabilität des Bereiches des Trägers mit der wenigstens einen Sendeeinheit zu gewährleisten und dadurch die Sendeeinheit vor unerwünschten Deformationen, die die Haltbarkeit der Sendeeinheit beziehungsweise deren Funktion beeinträchtigen können, zumindest teilweise zu schützen.

Dabei hat es sich als besonders vorteilhaft erwiesen, dass der elastische Bereich des Trägers als flexible Leiterplatte und/oder durch eine Reduktion des Trägermaterials in diesem Bereich und/oder durch Verwendung eines weniger steifen Trägermaterials in diesem Bereich ausgebildet ist. Durch die Ausbildung des elastischen Bereiches als flexible Leiterplatte gelingt es einerseits, eine sichere, signaltechnische Verbindung zwischen Sensoreinheit und Sendeeinheit sicherzustellen und dabei andererseits eine sehr starke, mechanische Entkopplung sicherzustellen, wodurch Schwingungen oder Verformungen vom einen Bereich mit steiferem Träger zu einem anderen, über den elastischen Bereich verbundenen Bereich weitgehend entkoppelt sind. Hierbei ist bevorzugt die flexible Leiterplatte zwischen Bereichen des Trägers angeordnet, die vorzugsweise einheitlich aus formsteifem Metall, Stahl, Edelstahl oder Kunststoff gebildet sind. Durch die Verwendung des insbesondere formsteifen Materials für die Bereiche des Trägers mit Sendeeinheit beziehungsweise Sensoreinheit sind diese Einheiten besonders geschützt.

Auch hat es sich bewährt, den Träger in dem elastischen Bereich zwischen einer Sensoreinheit und einer Sendeeinheit durch eine Reduktion des Trägermaterials in diesem Bereich elastisch auszubilden. Dabei kann die Reduktion in laterale wie auch in vertikale Richtung erfolgen. Insbesondere erfolgt sie in beide Richtungen. Neben der Möglichkeit, die unterschiedlichen Bereiche des Trägers durch unterschiedliche Materialien oder Körper und damit mit unterschiedlicher Steifigkeit auszubilden, hat es sich besonders bewährt, einen einzigen Träger vorzusehen, der eine oder mehrere dementsprechende elastische Bereiche mit einer Reduktion des Trägers aufweist. Diese Ausbildung des Torsionssensors erweist sich hinsichtlich der Fertigung als wenig aufwendig.

Eine bevorzugte Weiterbildung des erfindungsgemäßen Torsionssensors zur Erfassung der Torsion eines Wellenkörpers ist so ausgebildet, dass in einem Bereich des Trägers mit wenigstens einer Sensoreinheit eine insbesondere alle Sensoreinheiten schräg insbesondere in einem Winkel von etwa 45 Grad zur Längsachse des zu sensierenden Körpers insbesondere Wellenkörpers ausgerichtet sind. Durch diese schräge Ausrichtung des wenigstens einen Sensors der Sensoreinheit relativ zur Drehachse des zu sensierenden Körpers gelingt es, eine Torsion des Körpers effizient und aussagekräftig zu erfassen. Dabei werden mehrere insbesondere zwei Sensoren der Sensoreinheit kreuzförmig zueinander auf dem Träger so angeordnet, dass sie schräg insbesondere in einem Winkel von etwa 45 Grad zur Längsachse des zu sensierenden Körpers und damit zur typischen Rotationsachse ausgerichtet sind. Diese kreuzförmige Anordnung ermöglicht eine sehr differenzierte und aussagekräftige Sensierung unterschiedlicher Torsionen des zu sensierenden Körpers abhängig von der jeweiligen Bewegungssituation des Körpers.

Diese schräge Ausrichtung erfolgt auf dem Träger vorzugsweise so, dass der Träger in einer seiner Vorzugsrichtungen (Hauptausdehnungsrichtungen) auf der Oberfläche des zu sensierenden Körpers insbesondere Wellenkörpers parallel zu dessen Längsachse und damit zur typischen Rotationsachse auf einfache und sichere Weise ausgerichtet und befestigt werden kann. Dabei werden die einzelnen Sensoren vorzugsweise als Dehnungsmessstreifen (DMS) oder als optische Faser-Bragg-Gitter-Sensoren (FBGS) realisiert.

Eine besonders bevorzugte Weiterbildung des Torsionssensors mit wenigstens einer Sensoreinheit, die schräg insbesondere in einem Winkel von etwa 45 Grad zur Längsachse des zu sensierenden Körpers insbesondere Wellenkörpers ausgerichtet ist, zeigt eine mechanisch feste Verbindung zwischen Wellenkörper und dem Bereich des Trägers mit der wenigstens einen Sensoreinheit, wobei die feste, mechanische Verbindung etwa parallel oder etwa senkrecht zur Ausrichtung des oder der Sensoren des wenigstens einen Sensorelements ausgerichtet ist. Durch diese Ausrichtung der Sensoren etwa parallel beziehungsweise senkrecht zu der Ausrichtung der linienförmigen, festen Verbindung gelingt es, eine effiziente Übertragung der Torsionskräfte von dem zu sensierenden Körper insbesondere Wellenkörper auf den Träger im Bereich der schräg ausgerichteten Sensoren der Sensoreinheit zu gewährleisten und dadurch eine gute Auflösung und ein verlässliches Torsionssignal zu erreichen.

Dabei hat es sich besonders bewährt, den erfindungsgemäßen Torsionssensor zur Erfassung der Torsion eines Wellenkörpers, so weiterzubilden, dass der Träger zumindest teilweise formsteif insbesondere aus Stahl, Edelstahl oder Kunststoff ausgebildet ist. Dabei wird das Maß der Formsteifigkeit so gewählt, dass die Torsion des zu sensierenden Körpers insbesondere des Wellenkörpers über den Träger auf die auf dem Träger befindliche Sensoreinheit zur Erfassung einer Dehnung übertragen wird. Somit zeigt dieser Träger eine gewisse Elastizität, die es ermöglicht, einerseits die Torsion effizient zu übertragen und andererseits die Möglichkeit schafft, den Träger so fest zu verbinden, dass eine effiziente Übertragung von dem Körper auf den Träger und damit zur Sensoreinheit gewährleistet ist. Hierfür haben sich insbesondere Federn, elastische Werkstoffe insbesondere aus Stahl, Edelstahl oder Kunststoff bewährt. Diese sind bevorzugt plan mit einer definierten Materialstärke (Dicke) ausgebildet, so dass eine ausreichende Steifigkeit und damit Stabilität und andererseits eine ausreichende Elastizität zur Anpassung an die Struktur der Oberfläche des zu sensierenden Körpers und damit zur effizienten Übertragung einer Torsion des Körpers auf den Träger und somit zu der oder den Sensoreinheiten auf dem Träger ermöglicht ist. Dabei hat es sich besonders bewährt, den planen Träger mit einer lateralen Ausdehnung von wenigen Zentimetern insbesondere mit einer rechteckigen lateralen Struktur mit einer Kantenlänge von wenigen Zentimetern auszubilden. Dabei hat sich eine vertikale Ausdehnung (Dicke) des planen Trägers von etwa einem Millimeter insbesondere unter einem Millimeter gerade im Hinblick auf die gewünschte Elastizität besonders bewährt.

Hierbei hat es sich besonders bewährt, den Träger zumindest im Bereich der Sensoreinheit möglichst homogen auszubilden, was die Qualität der Übertragung der Verformung des Wellenkörpers auf den Träger und dann zur Sensoreinheit verbessert, was zu einer sehr originalgetreuen Verformungsübertragung führt. Darüber hinaus hat es sich auch bewährt, die mechanisch festen Verbindungen zwischen zu sensierendem Körper und Träger wie auch zwischen Träger und Sensoreinheit entsprechend zu gestalten.

Weiterhin hat es sich alternativ oder zusätzlich bewährt, den Torsionssensor zur Erfassung der Torsion eines Wellenkörpers so weiterzubilden, dass der Wellenkörper mit dem Träger mittels einer mechanisch festen Verbindung insbesondere durch Laserschweißen, Punktschweißen, Rollschweißen, Hartlöten, Löten und/oder Kleben verbunden ist. Durch diese mechanisch feste Verbindung des Trägers mit dem zu sensierenden Körper gelingt es, eine Verformung des Körpers auf den Träger zu übertragen und mit dem vorteilhaften Torsionssensor sicher zu erfassen.

Besonders bewährt haben sich dabei feste Verbindungen, die mittels Laserschweißen, Punktschweißen, Rollschweißen, Hartlöten, Löten und/oder Kleben gebildet sind, denn diese ermöglichen eine sehr sichere und feste, lokale Verbindung, die einerseits eine sichere Übertragung von Kräften des zu sensierenden Körpers auf den Träger und damit zu einer Sensoreinheit ermöglicht und andererseits eine sichere, feste Verbindung ermöglicht, ohne dass das Risiko einer insbesondere thermischen Beeinträchtigung einer Sensoreinheit des Torsionssensors beim festen, mechanischen Verbinden des Trägers mit dem zu sensierenden Körper deutlich erhöht ist.

Als besonders bevorzugte Vorrichtung hat sich ein Torsionssensor gezeigt, bei dem die mechanisch feste Verbindung zwischen dem Wellenkörper und dem Träger so angeordnet ist, dass die Sensoreinheit insbesondere weitgehend umschlossen ist. Durch das Umschließen insbesondere das weitgehende Umschließen gelingt es, die Torsion des zu sensierenden Körpers im Bereich des Trägers effizient und damit flächig auf den Träger zu übertragen, wobei dies insbesondere in dem Bereich des oder der auf dem Träger angeordneten Sensoreinheiten erfolgt. Vorzugsweise wird dies dadurch erreicht, dass die feste Verbindung linienförmig, entweder als durchgehende Linie oder als punktierte Linie, zumindest auf gegenüber liegenden Seiten wenigstens einer Sensoreinheit angeordnet ist. Als besonders vorteilhaft hat es sich erwiesen, dass wenigstens eine Sensoreinheit U-förmig oder kreisförmig, mit oder ohne Lücke, umschlossen ist und dadurch eine sehr selektive und effiziente Übertragung von Verformungen insbesondere Torsionen des zu sensierenden Körpers auf die wenigstens eine umschlossene Sensoreinheit gewährleistet ist. Dies führt zu einem sehr aussagekräftigen Messergebnis des Torsionssensors.

Im Hinblick auf eine sehr sichere, hochqualitative Verbindung des Trägers und damit des Torsionssensors mit dem zu sensierenden Körper haben sich das Laserschweißen und/oder das Punktschweißen und/oder das Kleben insbesondere das flächige Kleben besonders bewährt, da bei der Ausbildung der festen, mechanischen Verbindung der Wärmeeintrag und damit das Risiko einer Schädigung der Sensoreinheit und anderer elektronischer oder optischer Komponenten auf dem Träger oder des zu sensierenden Körpers gering ist. Dennoch erweisen sich diese bevorzugten Verfahren als besonders wirksam im Hinblick auf die Schaffung einer mechanisch festen Verbindung zwischen Träger und zu sensierendem Körper, die zudem auch unter räumlich begrenzten, schwierigen Rahmenbedingungen effizient eingesetzt werden können.

Dabei wird die mechanisch feste Verbindung zwischen dem Wellenkörper und dem Träger bevorzugt im Randbereich des Trägers angeordnet, wobei sich eine mechanisch feste Verbindung, die sich wenigstens teilweise parallel zum Rand des Trägers erstreckt, besonders bewährt hat. Durch diese Anordnung der mechanisch festen Verbindung im Randbereich insbesondere parallel zum Rand des Trägers gelingt es einerseits, die Fertigung beziehungsweise Anbringung des Torsionssensors zu vereinfachen beziehungsweise sicherer zu gestalten und andererseits die Übertragung der Torsion auf den Träger und damit zu der wenigstens einen Sensoreinheit auf dem Träger sehr aussagekräftig zu gestalten.

Darüber hinaus hat es sich besonders bewährt, den Torsionssensor zur Erfassung der Torsion eines Wellenkörpers so weiterzubilden, dass auf dem Träger wenigstens eine Sensoreinheit und wenigstens eine Sendeeinheit schichtweise übereinander als Stapel angeordnet sind. Durch diese Anordnung gelingt es, die Fläche des Trägers und damit die Ausdehnung des Trägers für eine Sensierung durch die wenigstens eine Sensoreinheit zu verwenden und dadurch die Möglichkeit zu schaffen, die Torsion sehr genau zu bestimmen und zugleich einen kompakten Torsionssensor zu schaffen, der eine effiziente und sichere Übertragung der Signale des Torsionssensors zu einer abgesetzten Empfangseinheit ermöglicht. Dabei ist durch die gestapelte Anordnung mit der Sendeeinheit oberhalb der wenigstens einen Sensoreinheit insbesondere auf der Oberseite des Stapels eine besonders effiziente und wenig gestörte Übertragung mittels elektromagnetischer Wellen vorzugsweise mittels induktiver Kopplung gewährleistet.

Vorzugsweise wird dabei zwischen der wenigstens einen Sensoreinheit und der darüber angeordneten Sendeeinheit eine Trennschicht aus elastischem insbesondere aus gummielastischem Material angeordnet. Dadurch gelingt es, den mechanischen Einfluss von Schwingungen vom zu sensierenden Körper über den Träger beziehungsweise über die wenigstens eine Sensoreinheit auf die Sendeeinheit zu beschränken und dadurch die Langlebigkeit dieser Anordnung zu erhöhen und eine Versteifung des Trägers vermeiden. Eine solche Versteifung kann den Einsatzbereich des Torsionssensors beschränken. Dies ist im besonderen Maß durch die Verwendung eines gummielastischen Materials gegeben.

Alternativ oder ergänzend hat es sich besonders bewährt, den Torsionssensor zur Erfassung der Torsion eines Wellenkörpers, so weiterzubilden, dass auf dem Träger lateral zueinander wenigstens eine Sensoreinheit und wenigstens eine Sendeeinheit angeordnet und mit diesem verbunden sind. Durch diese flächige Anordnung wenigstens einer Sendeeinheit und wenigstens einer Sensoreinheit auf der Oberfläche des Trägers nebeneinander gelingt es, einen einfachen Aufbau des Torsionssensors zu schaffen, der sich als besonders robust erweist.

Nach einer besonders bevorzugten Weiterführung des erfindungsgemäßen Torsionssensors wird die Verbindung zwischen dem Träger und der wenigstens einen Sensoreinheit durch eine mechanisch feste Verbindung insbesondere durch Laserschweißen, Punktschweißen, Rollschweißen, Ultraschallschweißen, Hartlöten, Löten und/oder Kleben gebildet. Hierdurch wird eine dauerhafte und effiziente Übertragung der Torsionskräfte vom Träger auf die wenigstens eine Sensoreinheit geschaffen, die im Rahmen eines vorgelagerten Fertigungsprozesses unter optimalen Fertigungsbedingungen realisiert werden kann. Diese vorgelagerte Fertigung erfolgt somit unabhängig von der Einbausituation an einem beispielsweise konkret zu sensierenden Wellenkörper. Dies ermöglicht im besonderen Maße eine hochqualitative Fertigung des Torsionssensors und darüber hinaus ein besonders verlässliches, dauerhaftes und sicheres Anbringen auf dem zu sensierenden Körper.

Dabei hat es sich besonders bewährt, wenigstens eine Sensoreinheit mit wenigstens einem Dehnungsmessstreifen und/oder wenigstens einem Faser-Bragg-Gitter-Sensor zu versehen. Diese ausgewählten Sensoren ermöglichen eine sehr präzise und robuste Erfassung von Dehnungsänderungen, was gerade bei rotierenden insbesondere schnell rotierenden Wellenkörpern von besonderer Bedeutung ist.

Eine besonders bevorzugte Weiterbildung der Erfindung zeigt eine kontaktlose Übertragungseinheit zur Übertragung von Signalen zwischen der wenigstens einen Sendeeinheit, die mit der wenigstens einen Sensoreinheit auf dem Träger verbunden und auf dem zu sensierenden rotierenden Körper angeordnet ist, und einer abgesetzten Empfangseinheit mittels induktiver Kopplung. Diese bevorzugte Übertragung ermöglicht eine verlässliche und störungsarme Signalübertragung zwischen dem auf dem zu sensierenden rotierenden Körper angeordneten Torsionssensor und der wenigstens einen abgesetzten insbesondere statischen, nicht beweglichen Empfangseinheit.

Dabei hat es sich besonders bewährt, die kontaktlose Übertragungseinheit zur bidirektionalen Übertragung von Signalen insbesondere von Steuersignalen, von Temperatur- und/oder von Drehzahlsignalen vorzusehen, wobei fakultativ alternativ oder ergänzend elektrische Energie zur Versorgung der mit dem Träger mechanisch verbunden Teile der Übertragungseinheit und der wenigstens einen Sensoreinheit zusätzlich zu den bidirektional zu übertragenden Signalen vorgesehen ist. Diese zusätzlichen Übertragungen ermöglichen ein wesentlich differenziertes Bild über den Zustand des zu sensierenden Körpers, da es nun möglich ist, die Sensorsignale unter Berücksichtigung weiterer Einflussgrößen wie Temperatur, Umdrehungszahl usw. differenziert auszuwerten und zu beurteilen.

Durch die Möglichkeit der Energieversorgung des Torsionssensors auf dem möglicherweise rotierenden zu sensierenden Körper über die induktive Kopplung von der abgesetzten, insbesondere nicht beweglichen Empfangseinheit wird es möglich, den Torsionssensor ohne eigene Energieversorgung und damit sowohl einfacher wie auch gewichtsärmer zu realisieren, was den Einsatzbereich des Torsionssensors erheblich erweitert. Dadurch gelingt es, die durch einen Torsionssensor bedingte Unwucht deutlich zu verringern.

Vorzugsweise sind auf dem oder den Trägern ein oder mehrere weitere Sensoren (insbesondere Temperatursensoren, Drehzahlsensoren und/oder Beschleunigungssensoren) und/oder Komponenten zur Signalverarbeitung, zur Signalverstärkung, zur Signalspeicherung und/oder zur Analog-Digital-Wandlung von Signalen und/oder Speicher zum Puffern von elektrischer Energie vorgesehen. Dabei ist zumindest ein Teil dieser Komponenten insbesondere im Bereich der Sendeeinheit und/oder der auf dem Träger aufgebrachten Signalverarbeitungseinheit angeordnet und vorzugsweise mit einer oder beiden integriert zu jeweils einer gemeinsamen Einheit verbunden. Dieser beispielhafte Torsionssensor zur Erfassung der Torsion eines Wellenkörpers zeigt bevorzugt wenigstens eine auf dem Träger angeordnete Sendeeinheit und/oder wenigstens eine auf dem Träger angeordnete Signalverarbeitungseinheit, die einen Analog-Digital-Wandler zur Digitalisierung von Signalen, eine Signalverstärkereinheit, einen elektrischen Energiespeicher und/oder eine Signalverarbeitungseinheit aufweist. Er erweist sich als sehr kompakt, als gut zu fertigen und als robust.

Darüber hinaus hat es sich besonders bewährt, die kontaktlose Übertragungseinheit des Torsionssensors zur Erfassung der Torsion so auszubilden, dass verschiedene Signale insbesondere von verschiedenen Sensoreinheiten in Form einer sequenziellen Übertragung getrennt voreinander übertragen werden. Dabei können unterschiedliche Signale verschiedener Torsionssensoren oder Sensoreinheiten oder von unterschiedlichen Sensoren (insbesondere Temperatursensoren, Drehzahlsensoren und/oder Beschleunigungssensoren) getrennt voreinander hintereinander und zeitlich getrennt voneinander übertragen werden. Diese effiziente und technisch einfache Übertragungsmethode hat sich in Verbindung mit der Signalübertrag mit induktiver Kopplungen als sehr robust erwiesen.

Weiterhin hat es sich besonders bewährt, den Torsionssensor so auszubilden, dass zwei Träger, die mit wenigstens einer Sensoreinheit und mit wenigstens einer Sendeeinheit versehen sind, auf dem Umfang des Wellenkörpers gegenüberliegend zueinander angeordnet sind. Alternativ hierzu hat es sich auch bewährt, drei oder mehr Träger mit wenigstens einer Sensoreinheit und mit wenigstens einer Sendeeinheit vorzusehen und auf dem Umfang des Wellenkörpers gleichmäßig verteilt anzuordnen. Dabei wird die abgesetzte Empfängereinheit so ausgebildet, dass die zur ihr übertragenen Signale gemeinsam ausgewertet werden. Durch das mehrfache Vorsehen von Baugruppen mit Trägern, die mit wenigstens einer Sensoreinheit und mit wenigstens einer Sendeeinheit versehen sind, wird es möglich, genauere Ergebnisse zur Bestimmung der Torsion zu erreichen, wobei dieser Effekt durch die gleichmäßige Verteilung der Baugruppen über den Umfang des Wellenkörpers besonders verbessert wird, da sich hier störende Effekte besonders effizient und einfach ausgleichen. Zusätzlich gelingt es durch diese gleichmäßige Anordnung, mögliche Unwuchten durch den Torsionssensor mit mehreren solcher Baugruppen weitgehend auszugleichen und dadurch einen besonders robusten und aussagekräftigen Torsionssensor zu schaffen. Dabei gelingt es, bereits durch eine etwa gleichmäßige Verteilung der Baugruppen über den Umfang des zu sensierenden Wellenkörpers eine deutliche Verbesserung zu erreichen. Gerade das gegenüberliegende Anordnen bei einer geraden Anzahl an Baugruppen ermöglicht eine einfache Kompensation von Sensorsignalen aufgrund einer Biegung des Wellenkörpers durch sein Gewicht oder durch eine andere auf den Wellenkörper einwirkende Seitenkraft beispielsweise durch einen Zahnradeingriff, welche einen unerwünschten Störeffekt bei der Bestimmung der Torsion des Wellenkörpers darstellt. Mit dieser Anordnung kann eine Verfälschung resultierender Torsionssignals durch die Einwirkung parasitäre Kräfte neben den Torsionskräften vermieden werden.

Die parasitären Signalanteile, die von unerwünschten parasitären Kräften hervorgerufen werden - beispielsweise durch Biegemomente des oder/und Seitenkräfte auf den Wellenkörper - wirken auf beide gegenüberliegende Sensorelementen mit verschieden Vorzeichen ein und können durch Addition der beiden Signale der Sensoreinheiten in den Torsionssensoren beispielsweise in der Empfängereinheit eliminiert werden und damit eine Verfälschung des Torsionssignal vermieden werden. Dabei können Toleranzen der Sensoreinheiten über eine zusätzliche, fakultative Gewichtung der Sensorsignale korrigiert werden.

Dies führt zu einer einfacheren, genaueren Torsionsbestimmung bei einfacherer und robusterer Realisierung des Torsionssensors in Verbindung mit einem zu sensierenden Wellenkörper.

Eine besonders bevorzugte Ausbildung des Torsionssensors zeigt wenigstens eine Empfangseinheit zur Auswertung der ihr übertragenen Signale, die von der rotierenden Welle abgesetzt ausgebildet ist und die mit wenigstens einer Schnittstelle zur Verbindung mit einem Display, einer Auswerteeinheit und/oder einer Dokumentationseinheit versehen ist. Durch die so ausgebildete Empfangseinheit wird es dem Benutzer auf einfache Weise möglich, die Messergebisse beziehungsweise die Auswerteergebnisse zur Verfügung gestellt zu bekommen, wiedergegeben zu bekommen oder insbesondere mittels eines Datenloggers dokumentiert zu bekommen. Durch die abgesetzte Ausbildung gelingt es zusätzlich, die Empfangseinheit einfach und bedienfreundlich auszubilden. Insbesondere wird bei einer bidirektionalen Ausbildung der Übertragungseinheit eine effiziente und sichere Steuerung der mit dem zu sensierenden Körper verbundenen Komponenten des Torsionssensors ermöglicht.

Nach einer besonders bevorzugten Ausbildung des Torsionssensors zur Erfassung der Torsion eines Wellenkörpers ist wenigstens ein Träger so ausgebildet, dass er wenigstens eine insbesondere alle Sensoreinheiten so bedeckt, dass diese wenigstens eine Sensoreinheit in einem durch den Träger und den Wellenkörper gebildeten und umschlossenen Raum angeordnet ist. Durch diese Umschließung gelingt es, die wenigstens eine einbeschriebene Sensoreinheit vor störenden äußeren Einflüssen zu schützen und dadurch ein dauerhaft aussagekräftiges Messergebnis zu ermöglichen. Dabei ist die wenigstens eine einbeschriebene Sensoreinheit von dem Wellenkörper getrennt angeordnet, so dass die zu sensierende Torsion des Wellenkörpers ausschließlich oder praktisch ausschließlich über den Träger auf die wenigstens eine Sensoreinheit übertragen wird. Eine störende direkte Einflussnahme kann dadurch im Wesentlichen ausgeschlossen werden.

Als besonders vorteilhaft hat es sich dabei erwiesen, wenn zusätzlich die wenigstens eine Sendeeinheit auf der der einbeschriebenen Sensoreinheit abgewandten Seite des Trägers angeordnet ist. Damit ist diese wenigstens eine Sendeeinheit auf dem Träger auf der von dem Wellenkörper abgewandten Seite angeordnet und kann das Sendesignal effizient und wirkungsvoll übertragen.

Nach einer weiteren bevorzugten Ausbildung des Torsionssensors zur Erfassung der Torsion eines Wellenkörpers ist der Raum mit der einbeschriebenen wenigstens einen Sensoreinheit zumindest teilweise mit einem nicht festen Füllmaterial gefüllt. Dabei ist das Füllmaterial so gewählt, dass es sehr weich ausgebildet ist und dadurch keine störenden mechanischen Einflüsse auf die einbeschriebene wenigstens eine Sensoreinheit überträgt. Vorzugsweise wird ein schaumartiges Material als Füllung verwendet. Dieses Füllmaterial schützt die wenigstens eine einbeschriebene Sensoreinheit zusätzlich vor eindringenden Gasen oder Flüssigkeiten und ermöglicht dadurch ein dauerhaft aussagekräftiges Messergebnis.

Die Erfindung wird nachfolgend anhand bevorzugter Ausführungsbeispiele unter Bezugnahme auf die Abbildungen beispielhaft erläutert. Die Erfindung ist nicht auf diese bevorzugten Ausführungsbeispiele beschränkt.
- Fig. 1: zeigt in einer schematischen Darstellung einen beispielhaften, erfindungsgemäßen Torsionssensor zur Erfassung der Torsion eines Wellenkörpers,
- Fig. 2: zeigt in einer schematischen Darstellung einen weiteren beispielhaften, erfindungsgemäßen Torsionssensor zur Erfassung der Torsion eines Wellenkörpers,
- Fig. 3: zeigt in einer schematischen Darstellung eine Anordnung eines beispielhaften, erfindungsgemäßen Torsionssensors zur Erfassung der Torsion eines Wellenkörpers mit Empfängereinheit,
- Fig. 4: zeigt in einer schematischen Darstellung von der Seite eine weitere beispielhafte Anordnung eines beispielhaften, erfindungsgemäßen Torsionssensors zur Erfassung der Torsion eines Wellenkörpers mit Empfängereinheit,
- Fig. 5: zeigt in einer schematischen Darstellung eine beispielhafte Empfängereinheit aus Fig. 3,
- Fig. 6: zeigt in einer schematischen Darstellung eine bespielhafte Baugruppe mit Träger, Sensoreinheit und Sendeeinheit
- Fig. 7: zeigt in einer schematischen Darstellung eine andere bespielhafte Baugruppe mit Träger, Sensoreinheit und Sendeeinheit und
- Fig. 8: zeigt in einer schematischen Darstellung eine andere bespielhafte Baugruppe mit Träger, Sensoreinheit und Sendeeinheit.

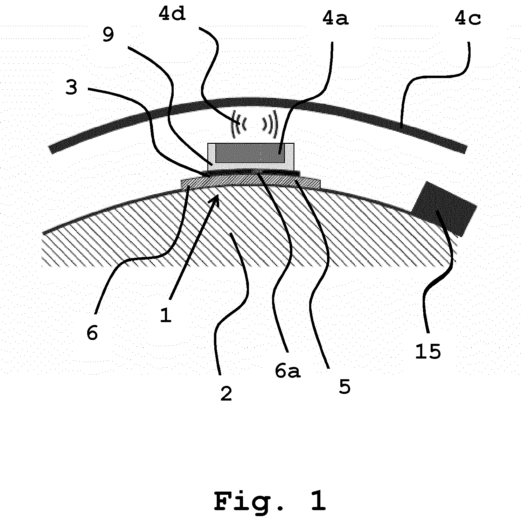

In Fig. 1 ist in einer schematischen Darstellung der beispielhafte Aufbau eines Torsionssensors 1 dargestellt. Der Torsionssensor 1 ist dabei auf der Oberfläche eines zylinderförmigen Wellenkörpers 2 angeordnet. Der Torsionssensor 1 zeigt einen Aufbau aus einem Träger 5, eine gummielastische Trennschicht 9 und eine Sendeeinheit 4a. Diese sind in der Art eines Stapels übereinander geschichtet. Der Torsionssensor 1 stellt dabei eine Baugruppe dar, die mit Hilfe einer festen, mechanischen Verbindung 6 mit der Oberfläche auf dem Wellenkörper 2 befestigt ist. Dies erfolgt bei diesem Torsionssensor mit Hilfe einer flächigen Verklebung zwischen dem Träger 5 des Torsionssensors 1 und der Oberfläche des Wellenkörpers 2, wobei zusätzlich zur Verklebung im Randbereich des Trägers 5 einzelne Schweißpunkte in Form von Mikroschweißpunkten als Teil der mechanisch festen Verbindung 6 vorgesehen sind. Der Träger 5 ist dabei als metallische Folie mit einer Materialstärke von unter einem Millimeter realisiert, so dass der Träger 5 ausreichend steif und dennoch genügend elastisch ausgebildet ist, so dass eine Torsion des Wellenkörpers 2 auf den Träger 5 über die mechanisch feste Verbindung 6 übertragen wird und diesen verformt.

Auf der dem Wellenkörper 2 abgewandten Seite des Trägers 5 ist eine Sensoreinheit 3 flächig mittels einer mechanisch festen Verbindung 6a durch Verkleben so angeordnet, dass eine Torsion des Trägers 5 durch die Sensoreinheit 3 als Dehnung erfasst und sensiert wird. Die Sensoreinheit 3 ist dabei unter Verwendung von Dehnungsmessstreifen 3 realisiert. Durch die mechanisch festen Verbindungen 6,6a zeigen der Träger 5 wie auch die Sensoreinheit 3 eine Krümmung, die der Oberflächengestalt des zu sensierenden Körpers, der hier als Wellenkörper 2 realisiert ist, entspricht. Damit folgen der Träger 5 und die Sensoreinheit 3 jeglicher innerer Bewegung des Wellenkörpers 2, insbesondere einer Torsion des Wellenkörpers 2.

Auf der dem Träger 5 und dem Wellenkörper 2 abgewandten Seite der Sensoreinheit 3 ist die Sendeeinheit 4a angeordnet, die durch eine gummielastische Trennschicht 9 als Schutz umschlossen und von der Sensoreinheit 3 getrennt ist. Durch die gummielastische Trennschicht 9 ist eine Schwingungsentkopplung zum restlichen Torsionssensor 1, das heißt zur Sensoreinheit 3 und zum Träger 5 zumindest teilweise gegeben. Dadurch werden störende Schwingungen oder mechanische Dehnungsbelastungen von der Sendeeinheit 4a ferngehalten und eine unerwünschte Versteifung des Trägers 5 durch die Sendeeinheit 4a vermieden. Dadurch ist die Funktionsfähigkeit der Sendeeinheit 4a in besonderem Maße dauerhaft gewährleistet.

Die Sendeeinheit 4a koppelt über ein Koppelfeld 4d an eine Statorantenne 4c an, die als Induktionsschleife den Wellenkörper 2 mit dem Torsionssensor 1 berührungsfrei umschließt.

Die Kopplung erfolgt in Form einer induktiven Kopplung zu einer abgesetzten Empfangseinheit 4b, die mit der Statorantenne 4c verbunden ist. Über diese Kopplung werden nicht nur Signale von dem Torsionssensor 1 an die Empfangseinheit 4b übertragen sondern auch umgekehrt elektrische Energie zum Torsionssensor 1 zum Betreiben desselben.

Durch die Anordnung der Sendeeinheit 4a als oberste Schicht mit reduziertem Abstand zur Statorantenne 4c und ohne darüberliegende, dämpfende, weitere Komponenten wird eine möglichst ungestörte Kopplung zu der Empfangseinheit 4b über die Statorantenne 4c ermöglicht.

Zusätzlich werden auch weitere Signale übertragen. Beispielsweise wird von einem Temperatursensor 15, der benachbart zum Torsionssensor 1 auf der Oberfläche des Wellenkörpers 2 angeordnet ist, ein Temperatursignal über den Torsionssensor 1 zu der Empfangseinheit 4b übertragen. Dem Temperatursensor 15 ist auch ein Magnet zugeordnet, mittels dessen Hilfe es möglich ist, die Umdrehungszahl, also die Rotationsgeschwindigkeit des Wellenkörpers 2, mit Hilfe eines Hall-Sensors 14 zu bestimmen und für die Auswertung der Torsionssignale zu verwenden.

Mit Hilfe der erfassten Wellenkörpertemperatur gelingt es, die Restnullpunktdrift zu kompensieren und dadurch besonders verlässliche Messergebnisse des Torsionssensors 1 zu ermöglichen. Dies ist wichtig, da trotz sorgfältigen Aufbaus immer eine störende Restnullpunktdrift abhängig von der Wellenkörpertemperatur vorhanden ist. Im realen Betrieb kann der Wellenkörper 2 Temperaturen von - 40 °C bis +160°C annehmen, so dass erhebliche Messwertabweichungen durch die Restnullpunktdrift entstehen können und dadurch kompensiert werden sollten. Über eine thermische Beaufschlagung des Wellenkörpers 2 kann die Restnullpunktdrift ermittelt werden. Mit Hilfe der zusätzlich übertragenen Wellenkörpertemperatur zur Empfängereinheit 4b kann deren Logikeinheit 17 die Messwertabweichung basierend auf den bestimmten Driftdaten und der Wellentemperatur eliminieren. Zusätzlich kann die Wellentemperaturerfassung auch zur thermischen Überwachung des Wellenkörpers 2 herangezogen werden.

Mit Hilfe der erfassten Drehzahl kann eine Leistungsflussbestimmung über den Wellenkörper 2 erfolgen und zudem ein Stillstand des Wellenkörpers detektiert werden. Diese zusätzliche Größe kann ohne großen Aufwand vorteilhaft mit geringen Zusatzaufwand im System, wie oben beschrieben, miterfasst werden.

Durch den dargestellten stapelförmigen Aufbau des Torsionssensors 1 mit einem Träger 5, der als unterste Schicht lateral die anderen Einheiten überragt und der sich als einziges im direkten mechanischen Kontakt zu dem Wellenkörper 2 befindet, wird es möglich, den Torsionssensor 1 als eigenständige Baugruppe zu fertigen. Dies erfolgt unter optimalen Produktionsbedingungen beispielsweise in einem Reinraum unter Verwendung von maschineller insbesondere robotergestützter Hilfe. Dies führt dazu, dass der Torsionssensor 1 sehr zuverlässig und hochqualitativ gefertigt werden kann. Dieser Torsionssensor 1 wird dann als fertige Baugruppe auf der Oberfläche des zu sensierenden Wellenkörpers 2 befestigt und über die zuvor beschriebene feste, mechanische Verbindung 6 so verbunden, dass eine Torsion des Wellenkörpers 2 aus den Träger 5 und damit auf die Sensoreinheit 3 übertragen werden kann und durch diese verlässlich und effizient sensiert werden kann. Diese mechanisch feste Verbindung 6 ist einfach zu realisieren und damit wesentlich weniger anfällig als eine Befestigung einer Sensoreinheit 3 unmittelbar auf einem zu sensierenden Wellenkörpers 2. In der Praxis hat es sich gezeigt, dass gerade dieser Prozess sehr störungsanfällig ist und sehr häufig zu schadhaften Torsionssensoren führt. Dieses Risiko ist durch den erfindungsgemäßen Aufbau des Torsionssensors, wie er beispielsweise in Fig. 1 dargestellt ist, erheblich reduziert.

Durch die beschriebene, stapelförmige Struktur gelingt es, den Träger 5 mit kleiner Fläche zu realisieren, was den Einsatzbereich dieses Torsionssensors 1 besonders groß macht. Der Torsionssensor 1 zeigt dabei die Gestalt einer kleinen Briefmarke, welche mit dem Untergrund wie bei dem in Fig. 1 dargestellten Beispiel mechanisch fest verklebt und zusätzlich mehrfach punktuell verschweißt ist.

Dieser kontaktlose Sensor ermöglicht bei einfacher Handhabung ein verlässliches und aussagekräftiges Signal zur Torsion des zu sensierenden Körpers und erweist sich durch seinen Aufbau als sehr robust.

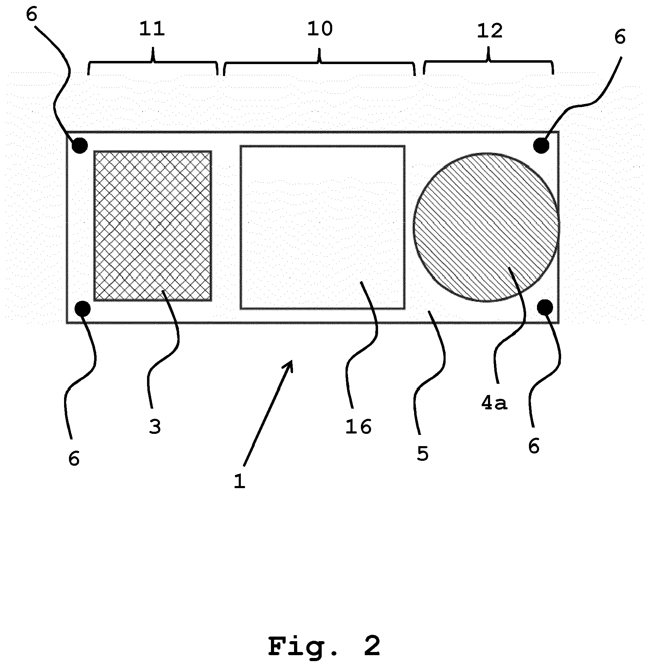

In Fig. 2 ist schematisch ein alternativer Aufbau des Torsionssensors 1 dargestellt. Er zeigt einen Träger 5, der aus einer rechteckig geschnittenen Edelstahlplatte realisiert ist und eine Länge von etwa einem Zentimeter und eine Breite von mehreren Millimetern aufweist. Auf der Oberfläche des Trägers 5 sind beabstandet zueinander die Sensoreinheit 3, die Sendeeinheit 4a und die Signalverarbeitungseinheit 16 angeordnet. Dabei liegt die Signalverarbeitungseinheit 16 in dem Bereich 10 zwischen der Sensoreinheit 3 und der Sendeeinheit 4a. Dabei ist die Sendeeinheit 4a großflächig ausgebildet und im Endbereich des Trägers 5 auf der Empfangseinheit 4b mit der Statorantenne 4c auf der zugewandten Seite des Trägers 5 und damit auf der dem Wellenkörper 2 abgewandten Seite des Trägers 5 angeordnet. Dies ermöglicht eine effiziente, induktive Kopplung zur Empfangseinheit 4b mit der Statorantenne 4c.

Die Sensoreinheit 3 basiert auf der Dehnungsmessstreifen-Technologie (DMS). Durch die formschlüssige Montage der Sensoreinheit 3 auf dem einen einzigen Träger 5 mit Hilfe einer mechanisch festen Verbindung 6a gelingt es, eine Verformung des einen Trägers 5 aufgrund der Torsion des Wellenkörpers 2 als Dehnung zu sensieren. Die Verformung des Trägers 5 analog zur Torsion des Wellenkörpers 2 ist dadurch sichergestellt, dass der eine Träger 5 mit der Oberfläche des Wellenkörpers 2 zur Bildung der festen, mechanischen Verbindung 6 vollflächig verklebt und durch wenige Schweißpunkte im Randbereich des Trägers 5 zusätzlich verschweißt ist.

Der Sensoreinheit 3 ist eine Signalverarbeitungseinheit 16 zugeordnet, die das Signal der Dehnungsmessstreifen zugeführt bekommt und mit Hilfe einer Wheatstone'schen Brücke auswertet. Die Verformung des Trägers 5 führt in den Dehnungsmessstreifen der Sensoreinheit 3 zu einer elektrischen Widerstandsänderung, welche über die Wheatstone'sche Brücke in ein elektrisches Signal als Maß für die Verformung des Trägers 5 und damit für die Torsion des Wellenkörpers 2 umgesetzt wird. Für eine optimale Erfassung der Dehnung und für geringe Nullpunktdriften werden alle vier Widerstandselemente der Wheatstone'schen Brücke vorzugsweise in Dehnungsmessstreifen-Technologie ausgeführt, so dass alle aktiv zum elektrischen Messsignal beitragen. Diese Verschaltung zeigt eine besonders ausgeprägte Signaleffizienz und durch die Gleichartigkeit der Dehnungsmessstreifen einen besonderes geringen Nullpunktdriftfehler. Es ist auch möglich, nur einen Teil der Widerstandselemente als Standardwiderstände und damit nicht als Widerstände in der Dehnungsmessstreifen-Technologie zu realisieren. Die Signalverarbeitungseinheit 16 zeigt zusätzlich eine Signalverstärkereinheit und einen nachgeschalteten einen A/D-Wandler, der die ihm zugeführten Messsignale digitalisiert und bevorzugt über die Sendeeinheit 4a seriell über die induktive Kopplung an die Empfangseinheit 4b überträgt.

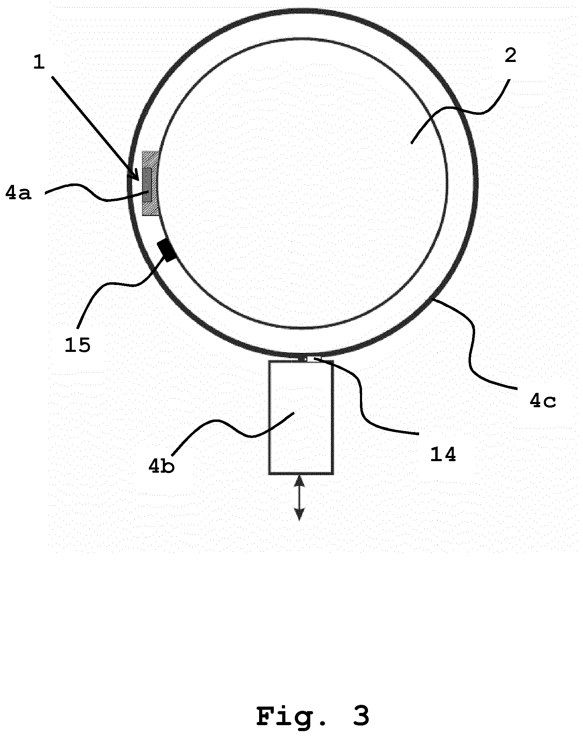

Fig. 3 zeigt in einer schematischen Darstellung ein Beispiel eines Aufbaus zur Erfassung der Torsion eines Wellenkörpers 2 in einer Sicht in Richtung der Längsachse beziehungsweise der Rotationsache des Wellenkörpers 2.

Auf dem Wellenkörper 2 ist ein als komplette Baugruppe realisierter Torsionssensor 1 fest montiert. Eine Statorantenne 4c umschließt als Induktionsschleife den Wellenkörper 2, ohne diesen oder den Torsionssensor 1 zu berühren. Die beiden Enden der Induktionsschleife der Statorantenne 4c sind mit der abgesetzten Empfängereinheit 4b verbunden. Der Torsionssensor 1 ist damit induktiv mit der Statorantenne 4c über die Sendeeinheit 4a gekoppelt. Die Empfängereinheit 4b empfängt die Signale der Sendeeinheit 4b des Torsionssensors 1, verarbeitet diese und gibt über die Schnittstelle 13 das Ausgangssignal ab.

Das in der Signalverarbeitungseinheit 16 des Torsionssensors 1 digitalisierte Signal wird damit telemetrisch über die Sendeeinheit 4a mittels induktiver Kopplung zur Statorantenne 4c und damit zur Empfängereinheit 4b übertragen. Da die Statorantenne 4c den Wellenkörper 2 umschließt, ist die induktive Kopplung des digitalen Signal über 360° Wellenkörperposition gegeben und damit eine kontinuierliche Übertragung des digitalen Signal möglich. Die Statorantenne 4c gibt das telemetrisch übertragene digitale Signal an die Empfängereinheit 4b weiter. Dort wird das digitale Signal über die Logikeinheit 17 der Empfängereinheit 4b weiterverarbeitet und via der Schnittstelle 13 entsprechend dem gewünschten Ausgangssignal ausgegeben. Das Ausgangssignal kann analog oder digital insbesondere in einer vorgegebenen Standardschnittstellenform umgesetzt sein.

Ein optionaler Drehzahlsensor, der als Hall-Sensor 14 ausgebildet ist, erfasst die Drehzahl des Wellenkörpers 2 mittels des auf der Oberfläche des Wellenkörpers 2 angeordnet Magneten 15. Die Drehzahlinformation wird in der Empfängereinheit 4b mit den Torsionssensorsignalen verarbeitet.

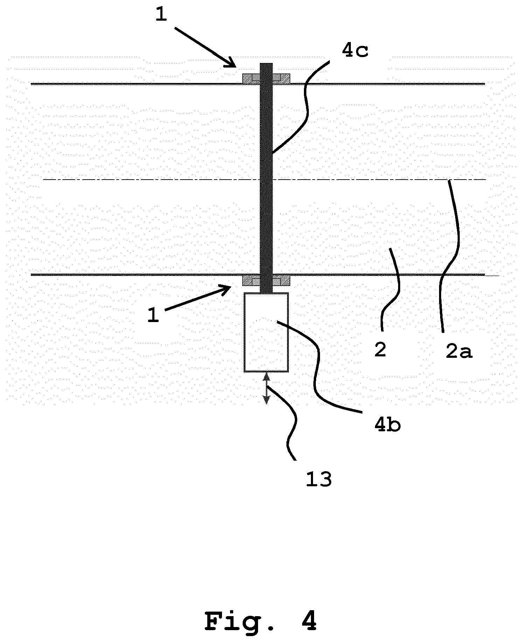

Fig. 4 zeigt in einer schematischen Darstellung ein weiteres Beispiel eines Aufbaus zur Erfassung der Torsion eines Wellenkörpers 2 in einer Seitenansicht orthogonal zur Längsachse beziehungsweise der Rotationsachse 2a des Wellenkörpers 2.

Der Aufbau zeigt einen Wellenkörper 2 mit zwei auf dem Umfang des Wellenkörpers 2 gegenüberliegend angeordneten Torsionssensoren 1. Ein Torsionssensor 1 ist dabei in der oberen Position (12 Uhr-Position) angeordnet, während der andere Torsionssensor 1 in der unteren Position (6 Uhr-Position) an dem Wellenkörper 2 angeordnet ist. Die Statorantenne 4c umschließt als Induktionsschleife den Wellenkörper (7) mit beiden Torsionssensoren 1. Beide Torsionssensoren 1 sind gleichzeitig induktiv mit der Statorantenne 4c und damit mit der Empfangseinheit 4b gekoppelt, die die Signale von beiden Torsionssensoren 1 erfasst, auswertet und über die Schnittstelle 13 ein Ausgangssignal abgibt.

Durch die gegenüberliegende Anordnung und damit die symmetrische Anordnung der Torsionssensoren 1 auf dem Umfang des zu sensierenden Wellenkörpers 2 gelingt es, den Einfluss von parasitären Kräften gering zu halten. In der Praxis sind dies Biegemomente, Seitenkräfte und Axialkräfte auf oder durch den zu sensierenden Wellenkörper 2. Diese Kräfte können das elektrische Sensorsignal, das die zu sensierende Torsion des Wellenkörpers 2 repräsentiert, verfälschen. Bei der gegenüberliegenden Anordnung und damit der symmetrischen Anordnung der Torsionssensoren 1 werden die digitalen Signale der einzelnen Torsionssensoren 1 in der Empfängereinheit 4b mit der Logikeinheit 17 so miteinander verrechnet, so dass der Signaleinfluss auf das Torsionssignal durch die parasitären Kräfte wie Biegemoment und Seitenkraft ganz oder weitgehend kompensiert wird. Dabei werden die die Messgrößen der beiden Sensoreinheiten 3 der beiden Torsionssensoren 1 zeitgleich erfasst, was zu einer sehr guten Korrektur führt. Die Synchronisation der Messungen wird beispielsweise durch ein zeitgleich übertragenes Steuersignal von der Empfängereinheit 4b an beide Sensoreinheiten 3 der beiden Torsionssensoren 1 sichergestellt. Damit wird in beiden Torsionssensoren 1 zeitgleich der Meßvorgang ausgeführt und das digitale elektrische Sensorsignal erzeugt. Die Übertragung der digitalen Sensorsignale der beiden Torsionssensoren 1 an die Empfangseinheit 4b erfolgt sequentiell. Dabei sorgt eine Logik in der Signalverarbeitungseinheit 16 der beiden Torsionssensoren 1 für die zeitliche Staffelung der digitalen Sensorsignale. Beide Torsionssensoren 1 werden über die Statorantenne 4c induktiv mit elektrischer Energie versorgt. Weiterhin können, um einen noch höheren Kompensationsgrad zu erreichen, auch mehr als zwei Torsionssensoren 1 insbesondere eine gerade Anzahl an Torsionssensoren 1 gleichmäßig über den Umfang verteilt auf der Oberfläche des zu sensierenden Körpers insbesondere des Wellenkörpers 2 montiert werden. Die zeitliche Staffelung der Übertragung der digitalen Sensorsignale und deren Verrechnung in der Empfängereinheit kann auch entsprechend analog ausgeführt werden.

Durch die gegenüberliegende Anordnung und damit die symmetrische Anordnung der Torsionssensoren 1 auf dem Umfang des zu sensierenden Wellenkörpers 2 gelingt es, den Einfluss von störenden Unwuchten durch die auf der Oberfläche des Wellenkörpers 2 angeordneten Torsionssensoren 1 gering insbesondere nahe Null zu halten, was die Robustheit der Torsionssensoren 1 beziehungsweise der Anordnung mit den Torsionssensoren 1 verbessert.

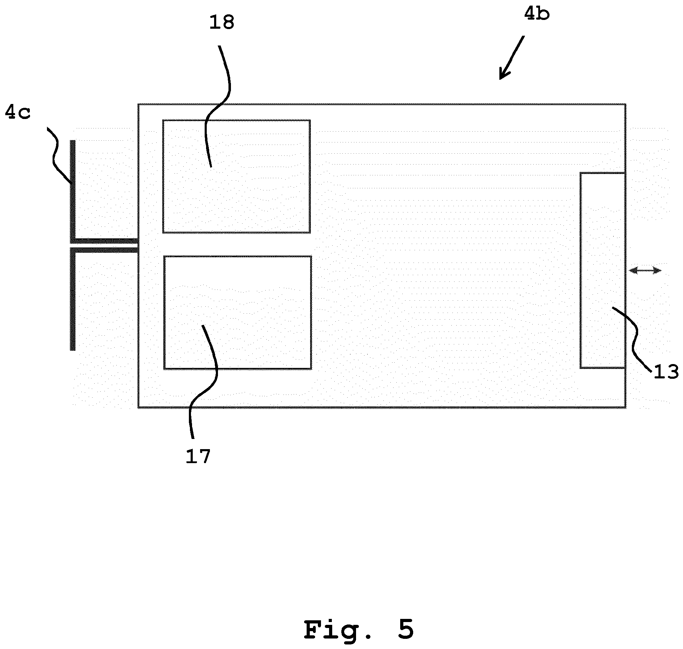

In Fig. 5 ist eine beispielhafte Empfangseinheit 4b schematisch dargestellt. Über die beiden Eden der Statorantenne 4c werden die induktiv übertragenen Sensorsignale von einem Torsionssensor 1 der Empfangseinheit 4b zugeführt. Dort werden sie mit Hilfe der Logikeinheit 17 unter Verwendung weiterer erfasster Informationen wie beispielsweise Temperatur des Wellenkörpers 2 oder Drehzahl des Wellenkörpers 2, die von Sensoren am Wellenkörper wie der Temperatursensor 15 oder von abgesetzten Sensoren im Bereich der Empfangseinheit 4b wie der Hall-Sensor 14 erfasst werden, ausgewertet. Das Auswerteergebnis wird dann insbesondere als Torsionsinformation dem Benutzer über die Schnittstelle 13 ausgegeben.

Weiterhin zeigt die Empfangseinheit 4b einen Wechselspannungsgenerator 18 zur Speisung der Statorantenne 4c, mittels der die Versorgung der Torsionssensoren 1 über die induktive Kopplung erfolgt. Durch diese Energieversorgung ist es möglich, den Torsionssensor 1 ganz oder weitgehend ohne elektrische Batterie oder Akku auszubilden. Allenfalls ein gewichts- und volumenmäßig kleiner elektrischer Speicher ist notwendig, um die Funktion des Torsionssensors 1 sicherzustellen. Dies führt zu einem geringen Gewicht des Torsionssensors 1 und zu einer Reduktion der durch den Torsionssensor 1 potentiell gebildeten Unwucht, was zu einem besonders robusten System führt.

Neben der Übertragung von elektrischer Energie zur Energieversorgung des Torsionssensors 1 werden auch andere Signale insbesondere Sensorsignale oder Steuersignale wie Synchronisationssignale übertragen. Des Weiteren können zusätzlich beispielhaft auch Programmiersignale an den Torsionssensor 1 zur Steuerung desselben übertragen werden. Hierdurch ist es möglich, bidirektional Signale neben der Energieversorgung zu übertragen.

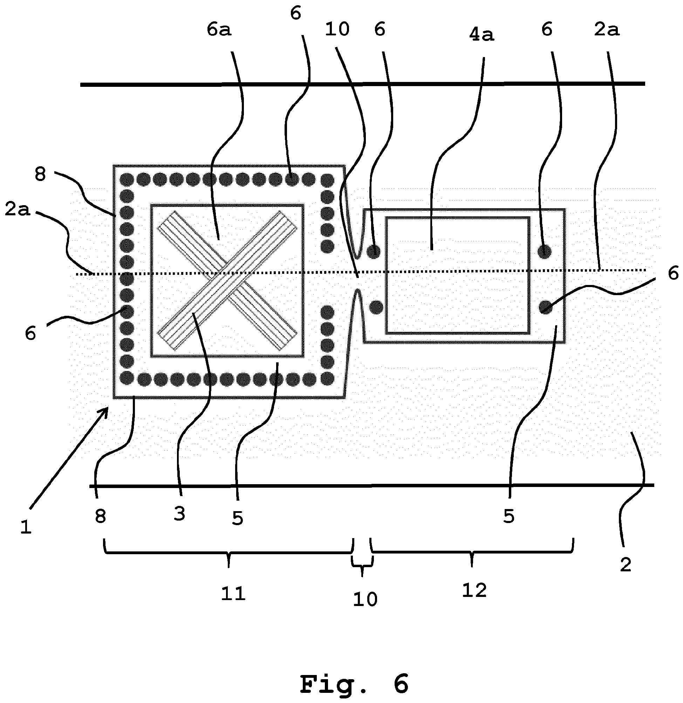

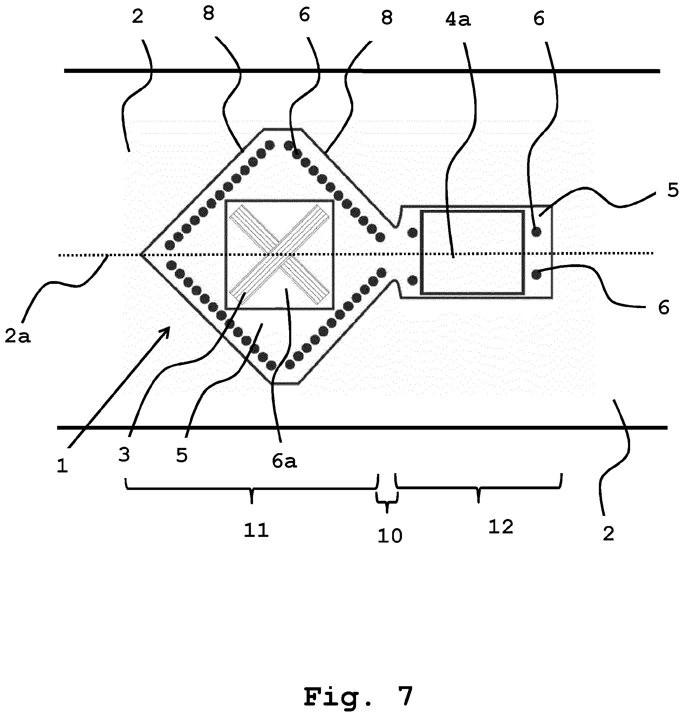

In Fig. 6 und 7 sind zwei alternative Ausbildungen zu dem Torsionssensor 1 aus der Fig. 2 schematisch dargestellt. Diese beiden Torsionssensoren 1 zeigen einen einzigen Träger 5, der einen Bereich 11 des Trägers 5 mit der Sensoreinheit 3 zeigt und einen Bereich 12 des Trägers 5 mit der Sendeeinheit 4a. Der Bereich 10 zwischen der Sensoreinheit 3 und der Sendeeinheit 4a ist dabei so ausgebildet, dass in diesem Bereich 10 eine Reduktion des Trägermaterials gegeben ist. Dies wird dadurch erreicht, dass laterale Einschnitte zwischen den Bereichen 11 und 12 vorgesehen sind und dadurch die Breite des Trägers 5 in diesem Zwischenbereich 10 reduziert ist. Die Stärke (vertikale Ausdehnung) des Trägers 5 ist in Fig. 6 konstant, während sie in Fig. 7 um etwa 20% reduziert ist.

Diese Reduktion im Bereich 10 ermöglicht es, dass der Bereich 12 des Trägers 5 mit der Sendeeinheit 4a und gegebenenfalls der Signalauswerteeinheit 16 von dem Bereich 11 des Trägers 5 mit der Sensoreinheit 3 zumindest teilweise mechanisch hinsichtlich des Schwingungsverhaltens entkoppelt ist. Damit ist es möglich, dass der Bereich 11 mit der Sensoreinheit 3 mittels der mechanisch festen Verbindung 6 so verbunden ist, dass eine Verformung des Wellenkörpers 2 auf den Träger 5 im Bereich 11 und damit auf die Sensoreinheit 3 in diesem Bereich 11 übertragen wird. Die mechanisch feste Verbindung 6 wird über einen Träger 5 aus Stahlblech, welcher mit Mikroschweißpunkten 6 mit dem Wellenkörper 2 verbunden ist, erreicht. Die Punktschweißtechnik für Mikroschweißpunkte erlaubt die Montage des Torsionssensors 1 mit sehr geringem Wärmeeintrag, was das Risiko einer Schädigung der elektrischen oder elektronischen oder optischen Komponenten des Torsionssensors 1 erheblich reduziert. Dabei werden die Mikroschweißpunkte dicht aneinander zu einer Linie angeordnet. Diese Linie ist im Randbereich des Bereiches 11 des Trägers 5 parallel zum Rand 8 angeordnet und umschließt die Sensoreinheit 3 fast vollständig. Die Lücke in der Linie der Mikroschweißpunkte 6 befindet sich im Bereich 10 der Reduktion des Trägers 5. Dadurch ist eine sehr originalgetreue Verformungsübertragung von dem Wellenkörper 2 auf den Träger 5 im Bereich 11 und damit auf die Sensoreinheit 3 gewährleistet. Um die Übertragung noch zu verbessern, wird der Träger 5 im Bereich 11 vollflächig mit der Oberfläche des Wellenkörpers 2 verklebt.

Dagegen wird der Bereich 12 des Trägers 5 mit der Sendeeinheit 4a nur mit wenigen, einzelnen Mikroschweißpunkten mit dem Wellenkörper 2 verbunden. Diese Verbindung reicht aus, um den Bereich 12 sicher und dauerhaft zu positionieren. Eine weitergehende Befestigung beispielsweise durch Verklebung oder durch eine hohe Anzahl an Schweißpunkten ist nicht notwendig und würde den Aufwand zur Verbindung des Torsionssensors 1 mit dem zu sensierenden Wellenkörper 2 deutlich anheben, was nicht erwünscht ist.

Die Bereiche 11 und 12 der beiden Varianten des Torsionssensors 1 aus Fig. 6 und 7 haben die Gestalt einer rechteckigen Platte. In Fig. 6 sind die beiden rechteckigen Platten parallel zueinander - also in einer Linie - verbunden und über den Bereich 10 mit der Reduktion des Trägers 5 angeordnet. Dabei ist diese Linie parallel zur Längsachse beziehungsweise Rotationsachse 2a des Wellenkörpers 2 ausgerichtet. Dagegen ist der Bereich 11 in Fig. 7 um etwa 45 Grad auf der Oberfläche des Wellenkörpers 2 verdreht zur Längsachse beziehungsweise Rotationsachse 2a des Wellenkörpers 2 ausgerichtet. Bei beiden Varianten sind die beiden Dehnungsmessstreifen der Sensoreinheit 3 so ausgerichtet, dass sie etwa in einem Winkel von 45 Grad schräg zur Längsachse beziehungsweise Rotationsachse 2a des Wellenkörpers 2 ausgerichtet sind. Die beiden Dehnungsmessstreifen der jeweiligen Sensoreinheit 3 sind dabei kreuzförmig und damit etwa orthogonal zueinander angeordnet und über eine flächige, mechanisch feste Klebstoffverbindung 6a mit dem Träger 5 so verbunden, dass eine Verformung des Trägers 5 effizient auf die Dehnungsmessstreifen der Sensoreinheit 3 übertragen wird.

Diese Torsionssensoren 1 ermöglichen eine sehr verlässliche, sichere und dauerhafte Sensierung der Torsion eines Körpers insbesondere Wellenkörpers 2. Sie erweisen sich auch in der Fertigung als eigenständige Baugruppe, als sehr hochwertig und gut zu fertigen. Diese Baugruppe ermöglicht zudem eine einfache und verlässliche Verbindung mit dem zu sensierenden Körper, was die Handhabung des Sensors auch durch weniger geschultes Fachpersonal ermöglicht.

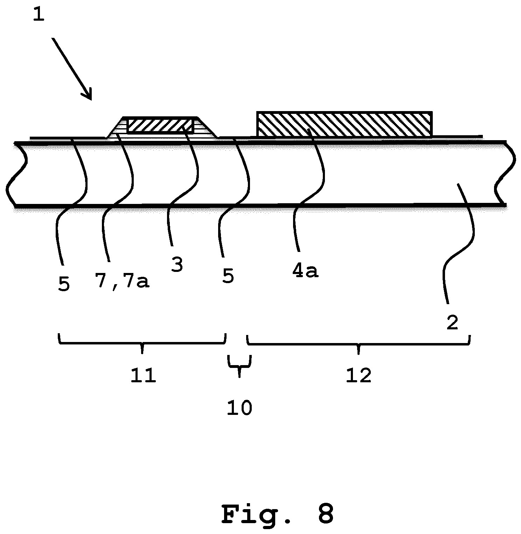

In Fig. 8 ist in einer schematischen Darstellung ein beispielhafter Aufbau eines Torsionssensors 1 in Verbindung mit dem Wellenkörper 2 dargestellt. Auf dem Wellenkörper 2 ist ein plattenförmiger Träger 5 angeordnet, auf dessen dem Wellenkörper 2 abgewandter Seite eine Sendeeinheit 4a angeordnet ist. In dem Bereich 11 ist der Träger 5 lokal begrenzt, erhaben von dem Wellenkörper 2 ausgebildet. Der Raum 7 zwischen dem erhabenen Bereich des Trägers 5 und dem Wellenkörper 2 enthält eine Sensoreinheit 3, die mit der dem Wellenkörper 2 zugewandten Seite des Trägers 5 in dem erhabenen Bereich fest verbunden ist. Der restliche Raum 7 ist mit einem Füllmaterial 7a ausgefüllt, das so weich ist, dass es eine Torsion des Wellenkörpers 2 nicht oder vernachlässigbar auf die Sensoreinheit 3 überträgt. Das Füllmaterial 7a bildet einen Schutz vor störenden Flüssigkeiten oder Gasen für die Sensoreinheit 3. Dieser Schutz wird zusätzlich durch den durch den Träger 5 gebildeten Deckel verstärkt, indem der Träger 5 um den erhabenen Bereich mit dem Raum 7 des Trägers 5 gasdicht fest durch Verschweißen verbunden ist. Durch diese Anordnung eines Torsionssensors gelingt es, eine dauerhafte und sichere Sensierung auch unter schwierigen Bedingungen zu ermöglichen.

### Bezugszeichenliste

- 1: Torsionssensor
- 2: Wellenkörper
- 2a: Längsachse bzw. Rotationsachse des Wellenkörpers
- 3: Sensoreinheit
- 4a: Sendeeinheit
- 4b: Empfangseinheit
- 4c: Statorantenne
- 4d: Koppelfeld
- 5: Träger
- 6: Mechanisch feste Verbindung zwischen Wellenkörper und Träger im Randbereich
- 6a: Mechanisch feste Verbindung zwischen Wellenkörper und einem Bereich des Trägers mit der Sensoreinheit
- 7: Raum zwischen dem Träger und dem Wellenkörper
- 7a: Füllmaterial
- 8: Rand des Trägers
- 9: Trennschicht
- 10: Bereich zwischen Sensoreinheit und Sendeeinheit
- 11: Bereich des Träger mit der Sensoreinheit
- 12: Bereich des Trägers mit der Sendeeinheit
- 13: Schnittstelle
- 14: Hall-Sensor
- 15: Magnet und Temperatursensor
- 16: Signalverarbeitungseinheit mit A/D-Wandler
- 17: Logikeinheit der Empfangseinheit
- 18: Wechselspannungsgenerator

## Patentansprüche

1. Torsionssensor (1) zur Erfassung der Torsion eines Wellenkörpers (2), mit einer Sensoreinheit (3) zur Erfassung der Dehnung eines Körpers (2),
und mit einer kontaktlosen Übertragungseinheit für Signale von der Sensoreinheit (3) über eine Sendeeinheit (4a) zu einer abgesetzten Empfangseinheit (4b),
wobei wenigstens ein Träger (5) vorgesehen ist,
der mit dem Wellenkörper (2) mechanisch so verbunden ist, dass Torsionen des Wellenkörpers (2) auf den Träger (5) übertragen werden und diesen verformen,
und der mit wenigstens einer Sensoreinheit (3) so mechanisch verbunden ist, dass wenigstens eine Sensoreinheit (3) eine Torsion des Trägers (5) als Dehnung erfassen kann,
und dass die wenigstens eine Sensoreinheit (3) mit wenigstens einer Sendeeinheit (4a) zur Übertragung von Signalen an die abgesetzte Empfangseinheit (4b) verbunden ist,
**dadurch gekennzeichnet,**
**dass** der Träger mit unterschiedlich steifen Bereichen (10,11,12) versehen ist.

2. Torsionssensor zur Erfassung der Torsion eines Wellenkörpers nach Anspruch 1, wobei der Träger (5) im Bereich (10) zwischen einer Sensoreinheit (3) und einer Sendeeinheit (4a) elastisch ausgebildet ist.

3. Torsionssensor zur Erfassung der Torsion eines Wellenkörpers nach Anspruch 2, wobei der elastische Bereich (10) des Trägers (5) als flexible Leiterplatte und/oder durch eine Reduktion des Trägermaterials in diesem Bereich (10) und/oder mit einem anderen Material als andere Bereiche (11,12) ausgebildet ist.

4. Torsionssensor zur Erfassung der Torsion eines Wellenkörpers nach Anspruch 2 oder 3, wobei ein Bereich (11) des Trägers (5) mit der Sensoreinheit (3) so ausgebildet ist, dass wenigstens eine insbesondere alle Sensoreinheiten (3) schräg insbesondere in einem Winkel von etwa 45 Grad zur Längsachse (2a) des Wellenkörpers (2) ausgerichtet sind.

5. Torsionssensor zur Erfassung der Torsion eines Wellenkörpers nach einem der vorstehenden Ansprüche 1 bis 4, wobei der Träger (5) zumindest teilweise formsteif insbesondere aus Stahl, Edelstahl oder Kunststoff ausgebildet ist.

6. Torsionssensor zur Erfassung der Torsion eines Wellenkörpers nach einem der vorstehenden Ansprüche insbesondere nach Anspruch 4, wobei eine mechanisch feste Verbindung (6a) zwischen Wellenkörper (2) und dem Bereich (11) des Trägers (5) mit der Sensoreinheit (3) etwa parallel oder etwa senkrecht zur Ausrichtung des oder der Sensorelemente (3) ausgerichtet ist.

7. Torsionssensor zur Erfassung der Torsion eines Wellenkörpers nach Anspruch 6, wobei die mechanisch feste Verbindung (6) zwischen dem Wellenkörper (2) und dem Träger (5) so angeordnet ist, dass die Sensoreinheit (3) insbesondere weitgehend umschlossen ist.

8. Torsionssensor zur Erfassung der Torsion eines Wellenkörpers nach einem der Ansprüche 6 bis 7, wobei die mechanisch feste Verbindung (6) zwischen dem Wellenkörper (2) und dem Träger (5) im Randbereich des Trägers (5) angeordnet ist, wobei sich insbesondere die mechanisch feste Verbindung (6) wenigstens teilweise parallel zum Rand (8) des Trägers (5) erstreckt.

9. Torsionssensor zur Erfassung der Torsion eines Wellenkörpers nach einem der Ansprüche 1 bis 8, wobei der Träger (5) wenigstens eine Sensoreinheit (3) und wenigstens eine Sendeeinheit (4a) schichtweise übereinander als Stapel angeordnet sind, wobei insbesondere zwischen der Sensoreinheit (3) und der darüber angeordneten Sendeeinheit (4a) eine Trennschicht (9) aus elastischem insbesondere aus gummielastischem Material angeordnet ist.

10. Torsionssensor zur Erfassung der Torsion eines Wellenkörpers nach einem der Ansprüche 1 bis 9, wobei auf dem Träger (5) lateral zueinander wenigstens eine Sensoreinheit (3) und wenigstens eine Sendeeinheit (4a) angeordnet und mit diesem verbunden sind.

11. Torsionssensor zur Erfassung der Torsion eines Wellenkörpers nach einem der Ansprüche 1 bis 10, wobei die Verbindung (6,6a) zwischen dem Träger (5) und der wenigstens einen Sensoreinheit (3) durch eine mechanisch feste Verbindung (6a) insbesondere durch Laserschweißen, Punktschweißen, Rollschweißen, Ultraschallschweißen, Hartlöten, Löten und/oder Kleben gebildet ist.

12. Torsionssensor zur Erfassung der Torsion eines Wellenkörpers nach einem der Ansprüche 1 bis 11, wobei die Sensoreinheit (3) wenigstens einen Dehnungsmessstreifen und/oder wenigstens einen Faser-Bragg-Gitter-Sensor aufweist.

13. Torsionssensor zur Erfassung der Torsion eines Wellenkörpers nach einem der Ansprüche 1 bis 12, wobei zwei Träger (5), die mit wenigstens einer Sensoreinheit (3) und mit wenigstens einer Sendeeinheit (4a) versehen sind, auf dem Umfang des Wellenkörpers (2) gegenüberliegend zueinander angeordnet sind
oder drei oder mehr Träger (5), die mit wenigstens einer Sensoreinheit (3) und mit wenigstens einer Sendeeinheit (4a) versehen sind, auf dem Umfang des Wellenkörpers (2) gleichmäßig verteilt angeordnet sind,
und wobei die abgesetzte Empfängereinheit (4b) so ausgebildet ist, dass die zur ihr übertragenen Signale gemeinsam ausgewertet werden.

14. Torsionssensor zur Erfassung der Torsion eines Wellenkörpers nach einem der Ansprüche 1 bis 13, wobei wenigstens ein Träger (5) so ausgebildet ist, dass er wenigstens eine Sensoreinheit (3) so bedeckt, dass die wenigstens eine Sensoreinheit (3) in einem durch den Träger (5) und den Wellenkörper (2) gebildeten und umschlossenen Raum (7) angeordnet ist.

15. Torsionssensor zur Erfassung der Torsion eines Wellenkörpers nach Anspruch 14, wobei der Raum (7) zumindest teilweise mit einem nicht festen Füllmaterial (7a) gefüllt ist.
